# EUROPEAN PATENT SPECIFICATION

(11) **EP 0 271 535 B1**
(45) Date of publication and mention of the grant of the patent: **01.12.1993**
(21) Application number: 87903833.9
(22) Date of filing: 05.06.1987
(51) Int. Cl.: H04M 1/03

(54) **ERGONOMIC TELEPHONE**
ERGONOMISCHER FERNSPRECHER
TELEPHONE ERGONOMIQUE

(30) Priority: 05.06.1986 AU 6302/86
(43) Date of publication of application: 22.06.1988
(73) Proprietor: MARKS, Peter John, South Melbourne, VIC 3205 (AU)
(72) Inventor: MARKS, Peter John, South Melbourne, VIC 3205 (AU)
(74) Representative: Newstead, Michael John
(86) International application number: PCT/AU87/00161
(87) International publication number: WO 87/07798

(56) References cited:
- EP-A- 166 198
- EP-A- 167 108
- DE-B- 2 134 265
- FR-A- 423 357
- GB-A- 870 090
- GB-A- 1 526 491
- GB-A- 2 158 328
- US-A- 1 216 480
- US-A- 1 341 280
- US-A- 1 899 046
- US-A- 4 185 175
- US-A- 4 228 325

## Description

The present invention relates to an ergonomic telephone and particularly to the handset of the telephone.

Historically, the design theory of the conventional handset was formulated at a time when design criteria focussed essentially on placing the speaker and microphone of the telephone together on a single hand piece and, internationally, the conventional telephone handset comprises a linking portion (the handle) which terminates at one end in a speaker housing portion and at the other in a microphone housing portion. Both the speaker and microphone housing portions of the conventional telephone handset have a face which is in profile inclined inwardly and forwardly to the longitudinal cross-section of the handle. While such construction satisfies the basic functional criterion of positioning the speaker portion over the ear of the user while positioning the microphone portion adjacent the mouth of the user when the telephone is first placed to the ear, the conventional handset, treats the user as a static object without allowing for the fact that handsets require hand, wrist and arm positions that are neither relaxed nor static and therefore place undue stress on joints and muscles. The normal use of conventional handsets requires the positioning of the user's hand in an area between his/her ear and mouth, close to and aligned with the angle of the cheek of the user which raises the arm to a significant extent and forces the wrist to grip the handset at an awkward attitude while requiring that arm, hand, wrist and shoulder muscles are activated during the normal use of the telephone. During the simple act of a telephone conversation an inevitable and natural relaxation of the involved anatomical features results in a falling away of the handset from its optimum functional position. Thus when the handset is used for conversations of any duration there is a pronounced physical cause and effect on the functionality and comfort of the handset. The microphone housing portion drops down and away from the mouth of the user with the result that the microphone is distanced from the mouth and the speaker housing portion also shifts to an inclination where seal with the ear is broken. Also, the conventional telephone embodies a construction which uses the inclination of the speaker contact portion to immediately compact the ear of the user against the skull of the user on contact to create the seal of speaker to ear thus leaving no distance between the ear and the skull for any subsequent movement of the handset. This exacerbates the problem of user comfort because the ear is, on contact, already compressed against the skull of the user. For a conventional handset to function optimally, a conscious, constant effort is required to maintain the alignment of speaker to ear and microphone before the mouth of the user.

In British Patent GB-A-870090, there is disclosure of a free standing telephone which can also be used as a handset. The telephone is substantially L-shaped with a microphone located in the foot of the 'L'. A forwardly inclined handle portion terminates in a rearwardly inclined ear piece.

The present invention relates to a telephone handset comprising a speaker portion, a microphone portion and a handle portion. The handset is adapted for connection to a telecommunications system to allow a telephone conversation to be carried on by a user by holding the handset adjacent the cheek of the user's face with the speaker portion adjacent the ear and the microphone portion adjacent the user's mouth. The speaker portion includes an angled face rearwardly inclined to the handle portion for contact with the ear of the user.

The invention is characterised in that the handle portion comprises a grip portion positioned between the speaker portion and the microphone portion, the speaker portion being rearwardly inclined to the grip portion, and in that there is a contact zone between the speaker portion and the handle portion that is positioned to rest against the cheek of the handset user at a frontal region near the ear of the user, whereby said angled face is inclined away from the rear of the head of the user allowing said angled face to follow the physical line of the human ear so that pivotal forces are applied to the frontal region near the ear.

Various embodiments of the invention will be described by way of example only, with reference to the accompanying figures as follows:
Figure 1 is a front perspective view of a telephone handset;
Figure 2 is a side view of the telephone handset;
Figure 3 is a front perspective view of a telephone handset according to a further embodiment;
Figure 4 is a side view of a telephone handset according to yet a further embodiment;
Figure 5 is a further embodiment of the handset viewed from the rear;
Figures 6 and 7 are frontal and side views of the handset shown in Figure 5;
Figure 8 is a frontal view of a further embodiment of a handset;
Figure 8A shows a modified earpiece construction;
Figure 9 shows a handset and conventional telephone;
Figures 10A, 10B and 10C show the ergonomic features of the handset of the present invention; and
Figures 11A, 11B and 11C show the use of a conventional handset.

Referring to the Figures, the handset 30 has a speaker portion 1 and a microphone portion 2 which are connected by a handle portion 3 of substantially V configuration. A grip portion 4 is provided along the handle portion for holding of the telephone handset in use.

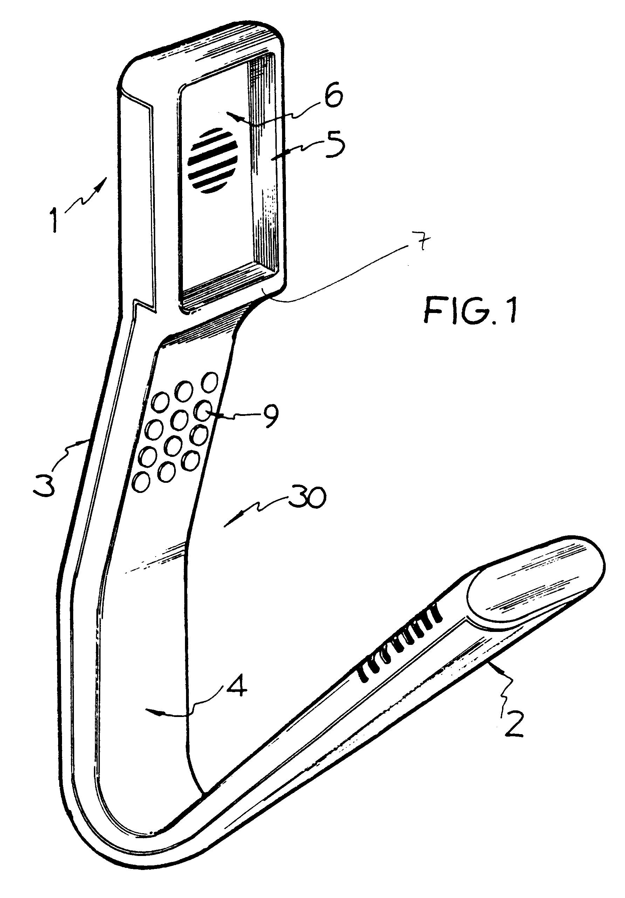

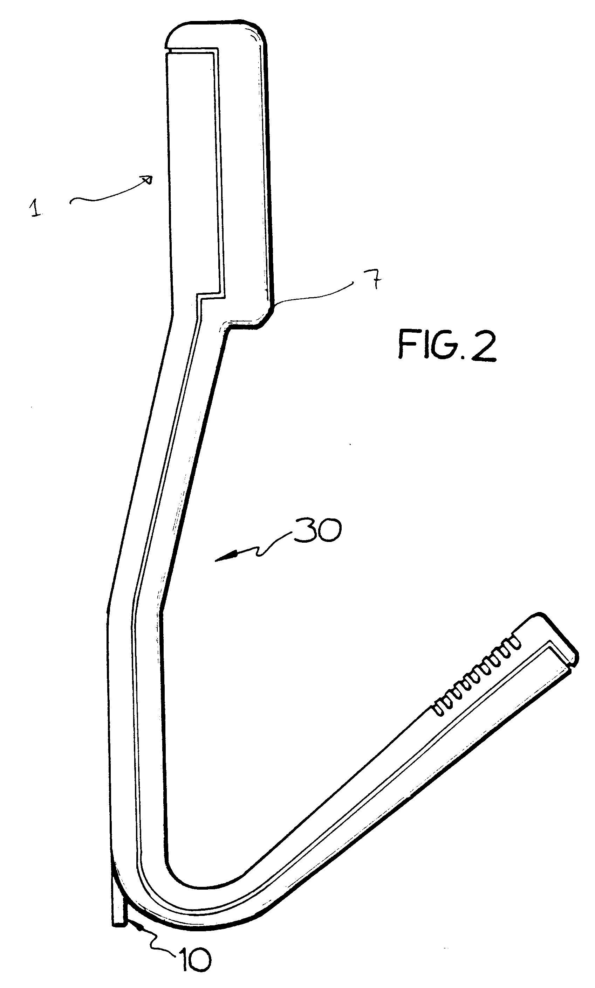

It can be seen from Figures 1 and 2 that the speaker portion is provided with a moulding 5 creating a depression 6 into which the ear of the user will fit comfortably with the moulding resting against the skull of the user. It will be further be seen that there is a contact zone, at 7, between the speaker portion 1 and the handle portion 3 that is positioned to rest against the cheek of the user of the handset.

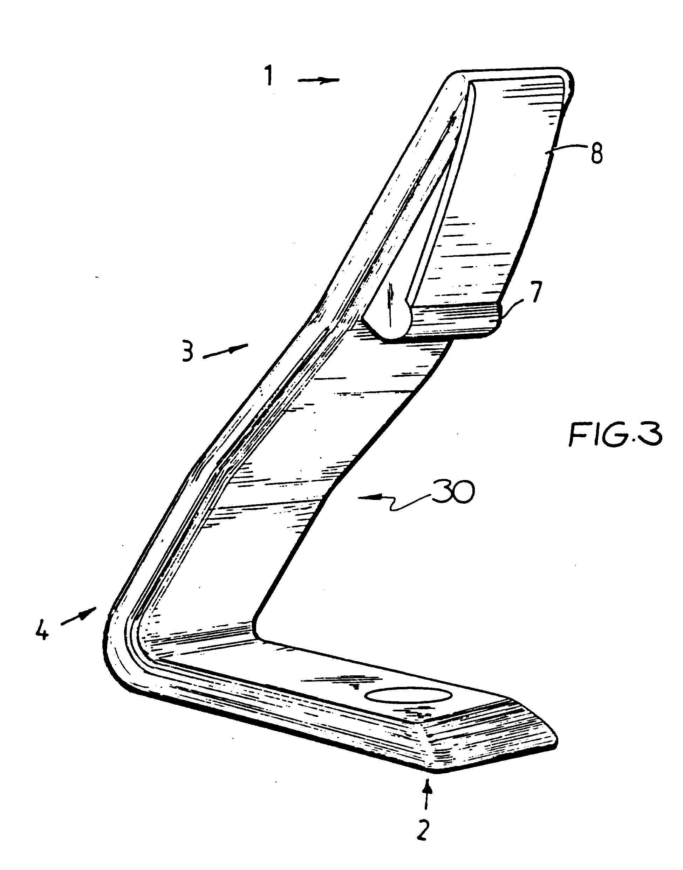

Referring to Figure 3, the speaker portion 1 is provided with an abutment 7 constituting a contact zone between the speaker portion 1 and the handle portion 3 that is positioned to rest against the cheek bone of the user and from which the remainder of the speaker portion 8 is angled away from the cheek portion and presents a convex surface to the exterior. In use, that part of the speaker portion designated 8 is angled away from the head of the user to accommodate the ear comfortably. Preferably, the surface of the speaker portion in contact with the ear can be made from a soft plastic or foam for comfort.

The dialling mechanism 9 of the telephone handset is preferably as shown in Figure 1, however it can also be placed on the reverse side of the handle portion 3 or between the grip portion 4 and microphone portion 2, again on either side of the handle portion.

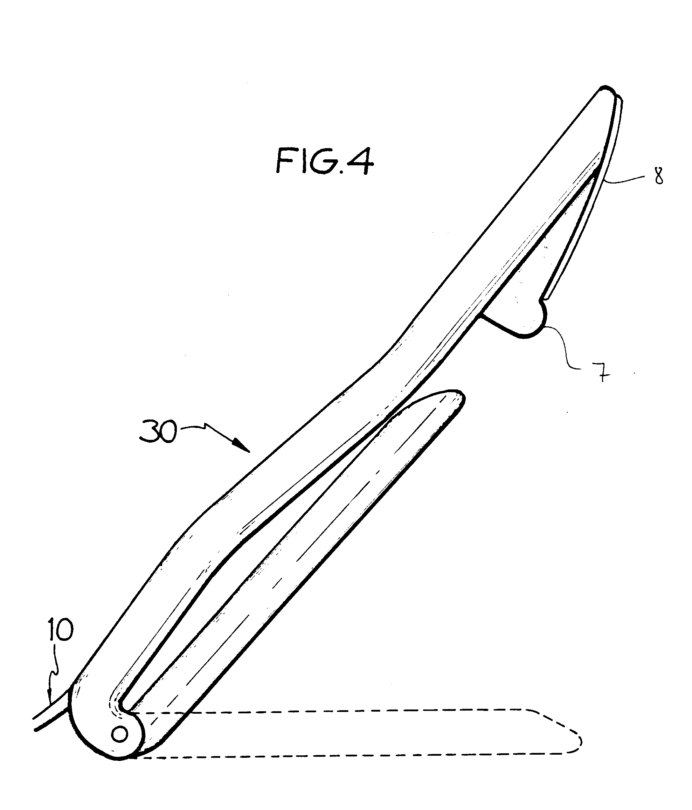

Referring to Figure 4, there is shown yet another embodiment of the invention. In this embodiment, the handle portion of the telephone handset 30 is hinged, and preferably spring loaded so that it can rest substantially flat when not in use. Otherwise the telephone handset is as shown in Figure 3.

Not shown in the Figures is a connect/disconnect button which can be placed anywhere on the telephone handset and preferably on the handle portion between the grip portion and microphone portion on the underside thereof. When the telephone handset is picked up, the said button will connect in readiness for dialling. The positioning of the cord 10 on the telephone handset is preferably as shown in Figures 2 and 4 to minimise drag and further reduce the energy required to use the telephone handset.

In use, the telephone handset is gripped at or about the grip portion and the hand is able to rest against the chest of the user. The arm of the user will be in substantially the same line as the major arm of the telephone handset and resting against the side of the user's body.

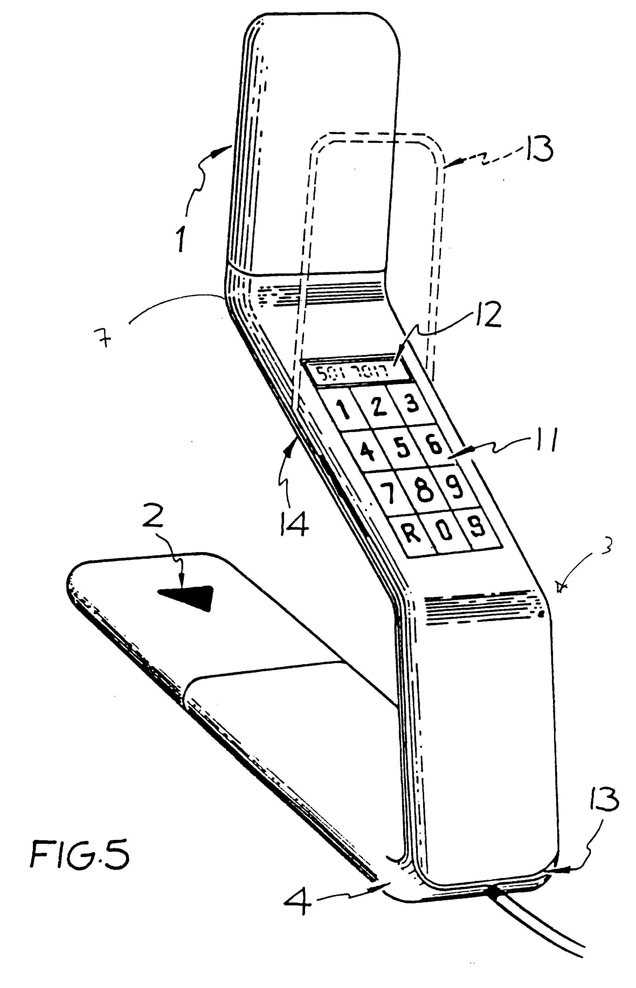

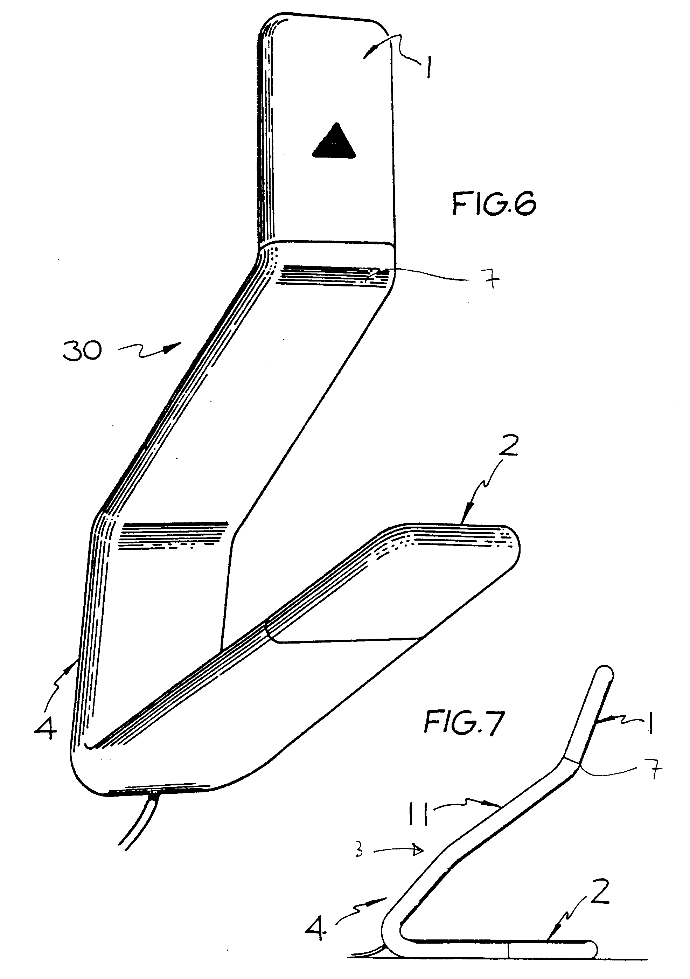

Referring to Figures 5 to 7, there is shown a handset 30 including a dialling mechanism 11 on the rear face of the handset. The dialling mechanism may include an LED display 12 to give a visible confirmation of the number called or any other technological functions.

A shoulder rest clip 13 is rotatably mounted on the handle portion at 14 to allow pivoting to the position shown in phantom outline. The clip rests flush with the handle portion when not in use. The clip is a loop or partial loop of stiff wire spring mounted on the handle portion. The handle portion 3 may be hinged in the manner shown in Figure 4 as desired. Between the speaker portion 1 and the handle portion 3 there is a contact zone, at 7, positioned to rest against the cheek of the user of the handset.

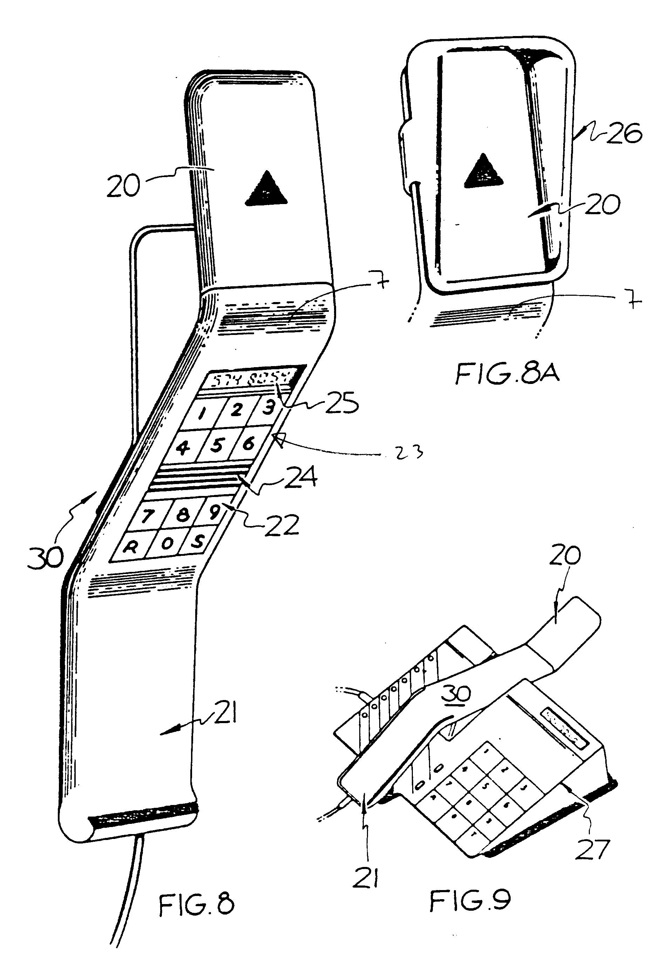

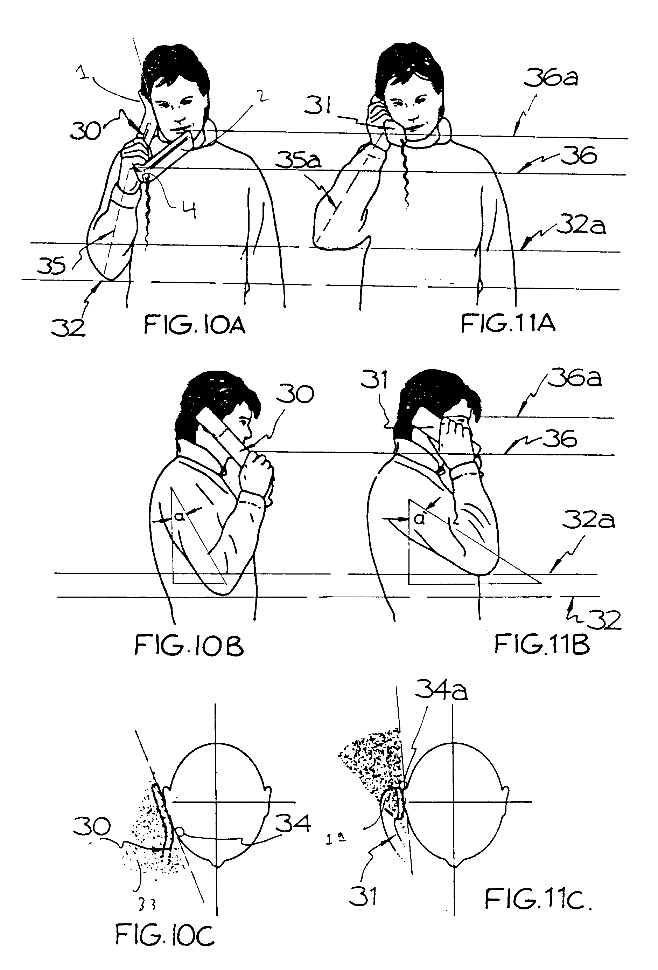

With reference to Figures 8, 8A and 9, there is shown a modified handset 30 of zig-zag configuration with the speaker portion 20 at the top and a handle portion 21 at the bottom. In the Figure 8 version the dialling mechanism 22 is located on the intermediate portion 23 as is the microphone 24. A number display 25 is also provided. Between the speaker portion 20 and the handle portion 21 there is a contact zone, at 7, positioned to rest against the cheek of the user of the handset.

The speaker portion has a clip-on housing 26, as shown in Figure 8A, which ensures that in use the housing makes contact with the skull of the user and encloses the ear thus minimising perception of external sound.

Figure 9 shows the handset 30 in a more conventional arrangement mounted on a telephone body 27.

Figures 10A, 10B, 10C and 11A, 11B, 11C contrast in semi-schematic fashion use of the handset 30 (Figures 10A, 10B, 10C) that forms some of the embodiments of the present invention in contrast with use of a conventional handpiece 31 (Figures 11A, 11B, 11C). The two significant differences between the handset 30 of Figures 10A, 10B and 10C and the handset 31 of Figures 11A, 11B and 11C concerns the fact that in Figures 10A, 10B and 10C the gripping portion 4 is below the mouth whilst the conventional handset 31 is gripped between the ear and the mouth and the earpiece or speaker portion 1 of the handset 30 shown in Figures 10A, 10B and 10C is inclined rearwardly to accommodate the inclination of the ear whilst the conventional earpiece 1a shown in Figure 11C has a forwardly inclined face that engages the rear of the ear. It can be deduced from Figures 10A, 10B and 10C and 11A, 11B and 11C that almost the entire upper body is utilised in what appears to be the rather simple task of holding a telephone handset to the ear. This comparatively simple exercise utilises muscles in the head and neck, the shoulders, the arm, the elbow, the wrist and the hand as well as certain chest and back muscles. It is a known fact that the handset does not remain static during use and especially during long telephone conversations. It is known that there is a tendency for the hand to drop caused by fatigue being generated within the arm and shoulder so that the microphone portion 2 drops away from the mouth. With a conventional handset of the kind illustrated in Figures 11A, 11B and 11C, both the microphone portion and the speaker portion are inclined inwardly towards a line drawn centrally along the longitudinal axis of the handset. This inward inclination problem illustrated in Figure 11C in that a high pressure contact zone is formed adjacent the rear of the ear at 34A. Since most human ears incline outwardly from the skull of the user, the speaker portion has been redesigned to adopt an inclination that is more akin to the inclination of the ear of the user. Thus, as the conventional handset of Figures 11A, 11B and 11C drops away at the chin through extended use, it can be seen that not only does the point of contact at the top of the ear become smaller thus increasing the pressure but the speaker moves further away from the ear of the user thus reducing the quality of reception. In the embodiment illustrated in Figures 10A, 10B and 10C, the point of the elbow is positioned in a lower position 32 close to the optimum comfort position. The angle 'a' (Figure 10B) of the upper arm extended from the vertical is kept to a minimum and the contact zone that is between the ear piece and the handle portion contacts the upper cheek bone at point 34 (Figure 10C) so that the shaded wedge portion 33 points outwardly with the effect that the earpiece extends away from the rear of the ear rather than resting against the rear of the ear at 34A as shown in Figure 11C. The contact zone that is between the speaker portion and the handle portion and that rests against the cheek of the user serves to re-locate through a pivoting action forces that would otherwise be placed on the ear. Thus, the contact pressure on the ear is substantially reduced and likelihood of the mouthpiece dropping down and away from the mouth is reduced both by the improved hand position and orientation of the earpiece.

The improved hand position is further illustrated by the line 35 in Figure 10A which is at a small angle to the vertical so that the arm is at or close to its natural position at the side of the body. The hand is lifted only to line 36 as shown in Figures 10A and 10B whereas in Figures 11A, 11B, and 11C, the elbow position 32A and hand position 36A is higher to ensure proper handling of the conventional handset. Furthermore, the angle 'a' (Figure 11B) is larger thus increasing the leverage effect on the arm and stressing the arm muscles. The dimension between 32 and 32A increases leverage and the dimension between 36 and 36A means the arm must be extended from the side of the person as indicated by 35A (Figure 11A).

In the embodiments of Figures 1 and 2 the handle portion 3 comprises a grip portion 4 positioned between the speaker portion 1 and the microphone portion 2, the speaker portion 1 being rearwardly inclined to the grip portion 4. In these embodiments when in use, the grip portion 4 is positioned at a level below and spaced from the microphone portion 2 so that, in use, the arm and hand of the person holding the handle portion is located at a position of less stress. The angle between the arms of the handle portion is preferably 40 degrees or more, and according to the specific embodiment described between 48 degrees and 52 degrees. The angle is dependent somewhat on the length of the major arm of the handle portion and the minimum direct line distance between the speaker portion 1 and microphone portion 2 for comfortable alignment with the ear and mouth of a user. The major arm of the handle portion is that part of the handle portion extending from the speaker portion 1 to the end of the grip portion 4. Preferably, the major arm of the handle portion is elongated so that the grip portion 4 places the hand at or above chest level of the user, so that the lower arm and wrist can, if desired, rest on the chest whilst holding the telephone handset. It is considered that the lower attitude of the hand places the upper part of the arm in a more neutral position alongside the body and minimizes dropping or twisting of the wrist and consequently dropping of the mouthpiece away from the mouth which occurs when using conventional telephone handsets. The microphone may in this form be a directional microphone located adjacent to the number dialling means 9. The microphone may incorporate a filter to block background noise and transmit the voice of the user only. By utilising the telephone handset according to this embodiment the arm, wrist and hand are placed in a position about the chest of the user which alleviates the inherent tendency or necessity to drop the arm or hand during long telephone conversations.

Alternatively, (as shown in Figures 5 to 7) the handle portion 3 comprises a grip portion 4 one end of which is connected to the speaker portion 1 via an intermediate portion 11 and the other end of which is connected to the microphone portion 2, both the grip portion 4 and the speaker portion 1 being inclined relative to the intermediate portion 11.

The angled face of the speaker portion 1 may be constructed from soft plastics or foam material. The angled face may also include an envelope means 5 shaped to, in use, fit around and substantially envelope the ear of the user.

In yet another form of the invention shown in Figure 5, the dialling mechanism 11 can be placed on the reverse side of the telephone handset or alternatively on a console unit.

The dialling mechanism 11 may incorporate an LED display for the number dialled and other technological functions.

A rotating grip portion not shown may be provided on the handle portion so that in use the most comfortable and relaxed position of the wrist of the user can be obtained.

In embodiments of the invention described above with reference to Figures 8, 8A and 9, the handset 30 has a body which is, in longitudinal cross-section, of substantially zig-zag cross-section.

The handset of the embodiments described above has been specifically designed to provide improved ergonomic characteristics. Thus, the exact dimensions that make up the relative components of the handset are not critical. Since the physical dimensions of the user vary considerably it is understood that the exact dimensions of an optimum handset would vary in dependence on the physical characteristics of the user. For instance, it is known that the human ear comes in a variety of shapes and sizes and whilst the ear is generally inclined outwardly of the skull of the user, the exact angle of inclination and the size of ear varies from person to person. Thus, the ear piece is inclined rearwardly at an incline that corresponds in general terms to the inclination of the ear. It is the combination of the contact zone that is between the ear piece and the handle portion for contact with the cheek of the user, and the rearwardly inclined ear piece, that provides the ergonomic characteristics of the handset so that there is produced a handset that has been specifically designed for comfortable and easy use through prolonged periods without the resulting fatigue and ear soreness that is associated with conventional handsets.

## Claims

1. A telephone handset (30) comprising a speaker portion (1,20), a microphone portion (2,24) and a handle portion (3,21), the handset (30) being adapted for connection to a telecommunications system to allow a telephone conversation to be carried on by a user by holding the handset (30) adjacent the cheek of the user's face with the speaker portion (1,20) adjacent the ear and the microphone portion (2,24) adjacent the user's mouth, the speaker portion (1,20) including an angled face rearwardly inclined to the handle portion (3,21) for contact with the ear of the user, characterised in that the handle portion (3) comprises a grip portion positioned between the speaker portion (1) and the microphone portion (2), the speaker portion (1) being rearwardly inclined to the grip portion, and in that there is a contact zone (7) between the speaker portion (1,20) and the handle portion (3,21) that is positioned to rest against the cheek of the handset user at a frontal region near the ear of the user, whereby said angled face is inclined away from the rear of the head of the user allowing said angled face to follow the physical line of the human ear so that pivotal forces are applied to the frontal region near the ear.

2. A telephone handset as claimed in Claim 1 characterised in that the handset (30) has a body which is, in longitudinal cross-section, of substantially zig-zag cross-section.

3. A telephone handset according to Claim 1 characterised in that the handle portion (3) comprises a grip portion (4) one end of which is connected to the speaker portion (1) via an intermediate portion (11) and the other end of which is connected to the microphone portion (2), both the grip portion (4) and the speaker portion (1) being inclined relative to the intermediate portion (11).

4. A telephone handset according to Claim 3 characterised in that the grip portion (4) is positioned at a position below and spaced from the microphone portion (2).

5. A telephone handset as claimed in any one of the preceding claims characterised in that at least the angled face of the speaker portion (1) is constructed from soft plastics or foam material.

6. A telephone handset as claimed in any one of the preceding claims characterised in that the angled face of the speaker portion (1) includes an envelope means (5) shaped to fit around and substantially envelope the ear of the user.

7. A telephone handset according to any one of the preceding claims, characterised in that the angled face of the speaker portion (1) is convexly curved.

## Patentansprüche

1. Telefonhörer (30) mit einem Lautspracherabschnitt (1,20), einem Mikrophonabschnitt (2,24) und mit einem Griffabschnitt (3,21), wobei der Hörer (30) für eine Verbindung mit einem Telekommunikationssystem angepaßt ist, um zu gestatten, daß von dem Benutzer ein Telefongespräch geführt wird, indem der Hörer (30) nahe der Wange des Gesichts des Benutzers mit dem Lautsprecherabschnitt (1,20) nahe am Ohr und dem Mikrophonabschnitt (2,24) nahe am Mund des Benutzers gehalten wird, wobei der Lautsprecherabschnitt (1,20) für den Kontakt mit dem Ohr des Benutzers eine abgewinkelte Fläche umfaßt, die nach hinten zum Griffabschnitt (3,21) geneigt ist, dadurch gekennzeichnet, daß der Griffabschnitt (3) einen Halteabschnitt umfaßt, der zwischen dem Lautsprecherabschnitt (1) und dem Mikrophonabschnitt (2) angeordnet ist, wobei der Lautsprecherabschnitt (1) nach hinten zum Halteabschnitt geneigt ist, und daß es zwischen dem Lautsprecherabschnitt (1,20) und dem Griffabschnitt (3,21) eine Berührungszone (7) gibt, die so angeordnet ist, daß sie an der Wange des Hörerbenutzers in einem stirnseitigen Bereich nahe dem Ohr des Benutzers ruht, wodurch die genannte abgewinkelte Fläche vom Hinterkopf des Benutzers weg geneigt ist, was gestattet, daß die besagte abgewinkelte Fläche der Körperlinie des menschlichen Ohres folgt, so daß Drehkräfte auf den stirnseitigen Bereich nahe des Ohres aufgebracht werden.

2. Telefonhörer nach Anspruch 1, dadurch gekennzeichnet, daß der Hörer (30) einen Körper hat, der im longitudinalen Querschnitt von im wesentlichen Zickzack-Querschnitt ist.

3. Telefonhörer nach Anspruch 1, dadurch gekennzeichnet, daß der Griffabschnitt (3) einen Halteabschnitt (4) umfaßt, dessen eines Ende mit dem Lautsprecherabschnitt (1) über einen Zwischenabschnitt (11) verbunden ist und dessen anderes Ende mit dem Mikrophonabschnitt (2) verbunden ist, wobei sowohl der Halteabschnitt (4) als auch der Lautsprecherabschnitt (1) relativ zum Zwischenabschnitt (11) geneigt sind.

4. Telefonhörer nach Anspruch 3, dadurch gekennzeichnet, daß der Halteabschnitt (4) an einer Stelle unterhalb und mit Abstand von dem Mikrophonabschnitt (2) angeordnet ist.

5. Telefonhörer nach einem der vorstehenden Ansprüche, dadurch gekennzeichnet, daß wenigstens die abgewinkelte Fläche des Lautsprecherabschnitts (1) aus weichem Plastik oder Schaumstoffmaterial hergestellt ist.

6. Telefonhörer nach einem der vorstehenden Ansprüche, dadurch gekennzeichnet, daß die abgewinkelte Fläche des Lautsprecherabschnitts (1) eine Umhüllungseinrichtung (5) umfaßt, die so geformt ist, daß sie um das Ohr des Benutzers paßt und es im wesentlichen umgibt.

7. Telefonhörer nach einem der vorstehenden Ansprüche, dadurch gekennzeichnet, daß die abgewinkelte Fläche des Lautsprecherabschnitts (1) konvex gekrümmt ist.

## Revendications

1. Combiné téléphonique (30) comportant une partie formant haut-parleur (1, 20), une partie formant microphone (2, 24) et une partie formant poignée (3, 21), le combiné (30) étant adapté pour être raccordé à un système de télécommunications afin de permettre à un utilisateur de mener une conversation téléphonique en tenant le combiné (30) près de sa joue de façon que la partie formant haut-parleur (1, 20) soit près de son oreille et la partie formant microphone (2, 24) près de sa bouche, la partie formant haut-parleur (1, 20) comprenant une face orientée angulairement qui est inclinée vers l'arrière en direction de la partie formant poignée (3, 21) pour être en contact avec l'oreille de l'utilisateur, caractérisé en ce que la partie formant poignée (3) comporte une partie de préhension interposée entre la partie formant haut-parleur (1) et la partie formant microphone (2), la partie formant haut-parleur (1) étant inclinée vers l'arrière en direction de la partie de préhension, et en ce qu'il est prévu, entre la partie formant haut-parleur (1, 20) et la partie formant poignée (3, 21), une zone de contact (7) positionnée pour s'appuyer contre la joue de l'utilisateur du combiné, au niveau d'une zone antérieure proche de l'oreille de l'utilisateur, afin qu'ainsi ladite face orientée angulairement soit inclinée à distance de l'arrière de la tête de l'utilisateur pour pouvoir suivre la ligne naturelle de l'oreille humaine de façon que des forces de pivotement soient appliquées à la zone antérieure proche de l'oreille.

2. Combiné téléphonique tel que défini dans la revendication 1, caractérisé en ce que le combiné (30) comporte un corps qui, en coupe longitudinale, a une section transversale sensiblement en zigzag.

3. Combiné téléphonique selon la revendication 1, caractérisé en ce que la partie formant poignée (3) comporte une partie de préhension (4) dont une extrémité est reliée à la partie formant haut-parleur (1) par une partie intermédiaire (11), et dont l'autre extrémité est reliée à la partie formant microphone (2), la partie de préhension (4) et la partie formant haut-parleur (1) étant toutes les deux inclinées par rapport à la partie intermédiaire (11).

4. Combiné téléphonique selon la revendication 3, caractérisé en ce que la partie de préhension (4) est placée au niveau d'un emplacement situé au-dessous de la partie formant microphone (2) et espacé de celle-ci.

5. Combiné téléphonique tel que défini dans l'une quelconque des revendications précédentes, caractérisé en ce que la face orientée angulairement au moins de la partie formant haut-parleur (1 )est réalisée à partir de matières plastiques molles ou d'un matériau en mousse.

6. Combiné téléphonique tel que défini dans l'une quelconque des revendications précédentes, caractérisé en ce que la face orientée angulairement de la partie formant haut-parleur (1) comporte un moyen enveloppant (5) conformé pour s'ajuster autour de l'oreille de l'utilisateur et pour envelopper sensiblement celle-ci.

7. Combiné téléphonique selon l'une quelconque des revendications précédentes, caractérisé en ce que la face orientée angulairement de la partie formant haut-parleur (1) présente une courbure convexe.
